# EUROPÄISCHE PATENTSCHRIFT

(11) **EP 1 478 892 B1**
(45) Veröffentlichungstag und Bekanntmachung des Hinweises auf die Patenterteilung: **13.07.2005**
(21) Anmeldenummer: 03744753.9
(22) Anmeldetag: 26.03.2003
(51) Int. Cl.: F26B 17/20, A23N 17/00

(54) **KONDITIONIERER**
CONDITIONER
CONDITIONNEUR

(30) Priorität: 26.03.2002 DE 10213737; 08.07.2002 DE 10230817
(43) Veröffentlichungstag der Anmeldung: 24.11.2004
(60) Teilanmeldung: 04019766.7
(73) Patentinhaber: Bühler AG, 9240 Uzwil (CH)
(72) Erfinder: HERMSMEYER, Andrea, CH-9244 Niederuzwil (CH); HANIMANN, Philipp, CH-9000 St. Gallen (CH)
(74) Vertreter: Frommhold, Joachim, Dr.
(86) Internationale Anmeldenummer: PCT/CH2003/000198
(87) Internationale Veröffentlichungsnummer: WO 2003/081155

(56) Entgegenhaltungen:
- EP-A- 0 610 789
- GB-A- 1 106 445
- US-A- 1 449 280
- US-A- 1 690 753
- US-A- 1 793 638
- US-A- 4 659 299

## Beschreibung

Die Erfindung betrifft ein Verfahren zur Herstellung konditionierter Futter- oder Lebensmittel in einem Konditionierer gemäß den Merkmalen des Oberbegriffs von Anspruch 1. Ein derartiges Verfahren ist aus der EP-A-0 610 789 bekannt.

Die Erfindung betrifft auch einen Konditionier zur Verwendung in dem Verfahren.

Konditionierer werden einzeln als Prozessoren oder in Verbindung mit Press- bzw. Expanderanlageri bei der Aufbereitung von Futtermitteln oder Lebensmitteln verwendet. Allgemein handelt es sich um Mischaggregate, in denen ein zu behandelndes Produkt über eine gewisse Verweildauer thermisch oder hydrothermisch behandelt wird. Diese Behandlung dient zur Hygienisierung der Produkte, der Verbesserung des Nährwertes und/oder der Produktstruktur.

Derartige Mischaggregate sind zum Beispiel aus den EP-B-231764 und EP-B-610789 bekannt. Hierbei ist einem solchen Mischer modulartig eine Dosiereinrichtung vorgeschaltet und aus dem Mischer wiederum wird eine Pressform oder ein Expander gespeist. Das Mischaggregat ist mit einem Heizmantel versehen und enthält eine rotierende Welle, die mit Misch- und Förderelementen bestückt ist.

Derartige Aggregate sind dabei entweder auf den Einsatz in Press- oder Expanderanlagen zugeschnitten oder nur solitär verwendbar, da der Anpassungsaufwand hoch ist.

Gemäss der EP-B-610789 ist zur Erwärmung der produktführenden Teile und Aggregate ein Luftkreislauf mit einem Ventilator, einer Verbindungsleitung, einem Lufterhitzer, einem seitlich am Produktausgangskanal angeordneten unteren Luftanschluss mit einem Lufteintrittskanal, einem Lufteintrittskanal mit einem seitlich am Produktzufuhrkanal angeordneten oberen Luftanschluss vorgesehen, wobei die Luftführung vom Produktausgangskanal über die Pressform, den Produktzufuhrkanal, das Speise- und Mischaggregat zum Produkteinlaufkanal erfolgt.

Bekannt sind auch Lösungen zur Energierückgewinnung bei Prozessoren, in denen zum Beispiel die Abwärme einer Expanderanlage genutzt wird.

Die Aufgabe der Erfindung besteht darin, ein Verfahren zur Herstellung konditionierter Futter- oder Lebensmittel zu entwickeln, das die Herstellung definiert konditionierter Produkte ermöglicht. Die Lösung dieser Aufgabe erfolgt mit den Merkmalen des Anspruchs 1.

Der Erfindung liegt weiterhin die Aufgabe zugrunde, einen Konditionierer zur Verwendung in einem Verfahren nach Anspruch 1 zu schaffen, der mit geringem Aufwand für unterschiedliche Einsatzbereiche anpassbar ist Diese Aufgabe ist mit den Merkmalen des Anspruchs 6 gelöst.

Der Konditionierer ist strikt modular aufgebaut, so dass Kapazitätsanpassungen oder dergleichen ausschliesslich durch Veränderung der Zahl der Einzelaggregate und/oder deren Längen- und/oder Durchmesservariation erfolgen. Bevorzugt besteht ein Konditionierer aus einem Dosierer, mindestens einem Mischer und auch mindestens einem Verweiler. Sämtliche Aggregate sind nach der Lösung von Stirnplatten austauschbar und bevorzugt vollständig mit Wärmeisolationen bzw. Heizelementen versehen.

Ober die Stimplatten auf beiden Seiten von Mischer und Verweiler können Antriebe, Rotoren und Arbeitselemente unkompliziert gewechselt werden. Möglich sind auch Ausführungen ohne Verweiler.

Der Konditionierer ist bevorzugt für einen kontinuierlichen Betrieb ausgelegt

Bei den bekannten Aufheizmodi durch Rückführung von heissem Dampf aus Pressen oder Expanderanlagen besteht das erhebliche Risiko, dass das noch zu konditionierende Produkt geschmacklich und/oder strukturell beeinträchtigt wird. Der Erfindung liegt daher die Überlegung zugrunde, heisse Luft nur für Aufheiz- und Trocknungsvorgänge (Sterilisieren) zu nutzen und im Betriebsmodus an Dosierer und Verweiler vorbeizuführen, um Dampf absaugen zu können. Dem Mischer wird Dampf zugeführt.

Das Aufheizen erfolgt hingegen bevorzugt im Rundlauf unter Einschlussder Presse oder des Expanders. Die Presse ist mit einem Bypass versehen, um auch den Übergängsbereich zu einem nachgeordneten Kühler mit zu erhitzen, um grösstmögliche Salmonellenfreiheit etc. zu erreichen.

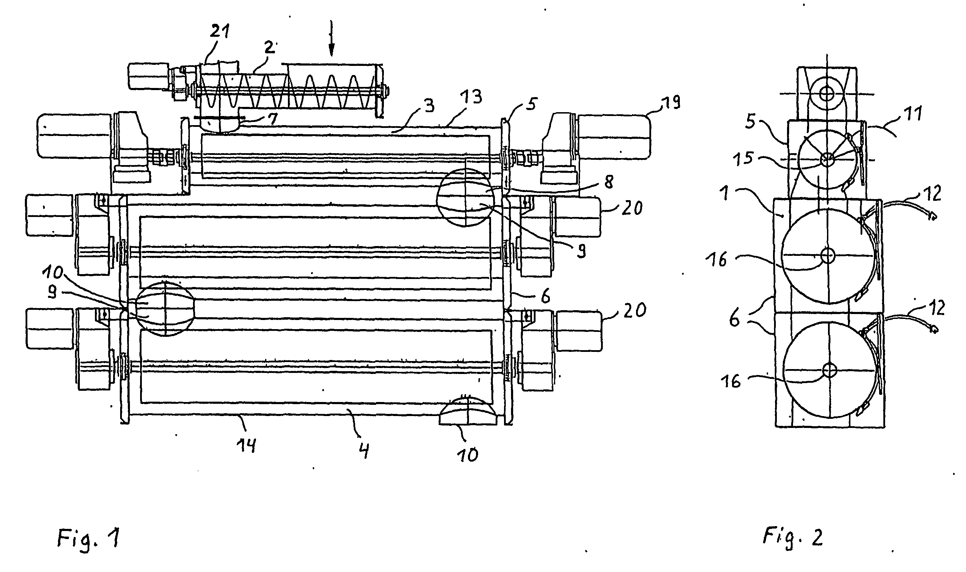

Die Erfindung wird nachfolgend in einem Ausführungsbeispiel an Hand einer Zeichnung näher beschrieben. In der Zeichnung zeigen die
- Fig. 1:: den Konditionierer in einer Prinzipdarstellung,
- Fig. 2:: den Konditionierer aus Figur 1 im Schnitt,
- Fig. 3:: die schematische Darstellung einer Würfelpressenanlage

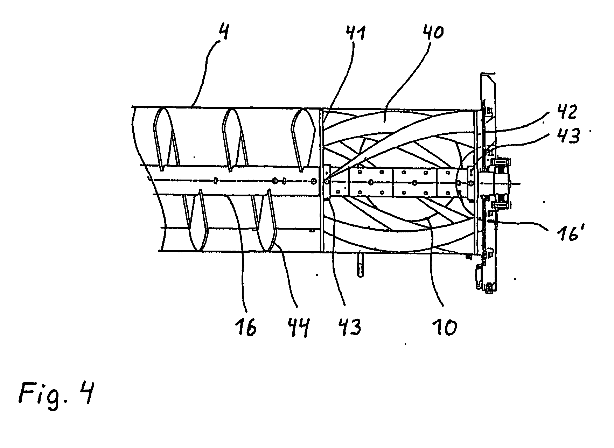

- Fig. 4: einen Verweiler (Ausschnitt).

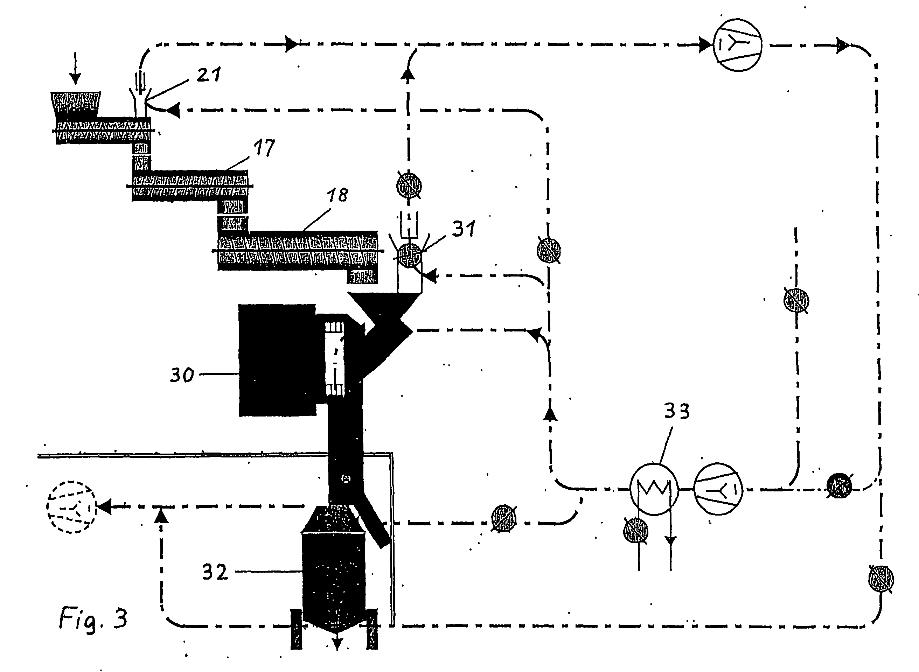

Ein Konditionierer 1 beinhaltet einen Dosierer 2 (Schneckendosierer), einen Mischer 3 und im konkreten Fall zwei Verweiler 4 (in der Fig. 3 ist vereinfacht nur ein Verweiler 4 angegeben), die übereinander angeordnet sind und ein Konditioniermodul bilden. Der Mischer 3 und die Verweiler 4 weisen jeweils gleichartige Stirnplatten 5 bzw. 6 auf, über die auch die Modulanordnung erfolgt.

Die Produktführung erfolgt über die entsprechenden Produktzuführöffnungen 7, 9 bzw. Produktabführöffnungen 8, 10. Über die Produktabführöffnung 10 des unteren Verweilers 4 erfolgt die Übergabe des Produkts in eine Würfelpresse 30. Der Dosierer 2 ist an der Produktzuführöffnung 7 des Mischers 3 angeflanscht.

Der Mischer 3 weist einen schnelllaufenden Rotor zur intensiven Produktdurchmischung mit Dampf, Gasen und/oder Flüssigkeiten auf. Der Verweiler 4 ist hingegen mit einem langsam laufenden Rotor versehen. Im Verweiler 4 wird das erhitzte, gemischte Produkt über eine vorbestimmte Zeit auf einer definierten Temperatur gehalten.

Mischer 3 und Verweiler 4 weisen dicht verschliessbare Öffnungen 11 bzw. 12 im jeweiligen Mantel 13 bzw. 14 auf. Die Mäntel 13 bzw. 14 sind rohrförmig und wie auch die Öffnungen 11, 12 und Stimplatten 5, 6 vollständig mit Heizmatten und Isolationsmitteln belegt. Bevorzugt sind die Innenseiten der Mäntel 13, 14, einschliesslich der Produktübergabeöffnungen (Bezugszeichen 7 bis 10) vollkommen glatt.

Mischer 3 und Verweiler 4 enthalten Rotoren 15 bzw. 16 mit Arbeitselementen 17, 18. Diese können schneckenförmig oder paddelförmig ausgebildet sein. Paddel sind überdeckend ausgebildet, was ein Anbacken von Produkt an der Gehäuseinnenwand von Mischer 3 oder Verteiler 4 unterbindet. Aussen sind an den Rotoren 15, 16 Antriebseinheiten 19, 20 angeflanscht. Die Rotoren 15, 16 bestehen aus gleichartigen Segmenten, so dass ein leichter Austausch gegeben ist und nur wenig Platz für Ausbau und Wechsel benötigt wird. Die Rotorwellen sind bevorzugt als Hohlwellen ausgebildet.

Für einen Wechsel eines Rotors 15, 16 o. a. genügt es, die Antriebseinheit 19 bzw. 20 resp. eine Stirnplatte 5, 6 zu entfernen und den Rotor nach lösen der gegenüber liegenden Lagerung herauszuziehen. Die Antriebe 19, 20 können wahlweise rechts oder links angeordnet sein.

Sämtliche Bauteile sind bevorzugt kompatibel und kombinierbar.

Der/die Verweiler 4 weist gegenüber dem Mischer 3 und dem Dosierer 2 geringere Drehzahlen des Rotors auf, so dass für einen kontinuierlichen Betrieb das Fassungsvermögen der Einzelaggregate abzustimmen ist.

Der Rotor 16 des Verweilers 4 ist im Bereich der Produktabführöffnung mit schraubenförmig verdrehten, bandförmigen Misch- und Förderelementen (Leitblech 40) ausgerüstet, die einen kontinuierlichen und hohen, gleichmässigen Produktfluss zur Würfelpresse 30 ermöglichen. Insbesondere soll durch eine leichte Überhebung des Produkts dessen Bewegung verzerrt und ein pulsieren desselben gedämpft werden.

Die Leitbleche 40 sind zwischen Rädern 41, 42 angeordnet und bilden mit diesen bevorzugt eine Baugruppe. Die Räder 41, 42 weisen nicht dargestellte Speichen auf, die einen ungehinderten Produktfluss ermöglichen. Die Räder 41, 42 sind mittels üblicher Buchsen 43 auf dem Rotor 16 des Verweilers 4 angeordnet.

Die Ausführung der Leitbleche 40 und deren Anzahl kann mit der Kapazität bzw. Bauform des Konditionierers 1 variieren. Minimal sind 4 Leitbleche vorgesehen, möglich sind auch bis ca. 16 derartige Leitbleche 40.

Bedarfsweise können auf der Rotorwelle noch zusätzliche Paddel vorgesehen sein.

Zur Aufheizung einer Würfelpressenanlage wird zunächst die Würfelpresse 30 von einem Durchlauferhitzer 33 mit Heissluft beschickt und insbesondere Pressform/Pressrollen und Produkteinlauf werden aufgeheizt, wie dies zum Beispiel aus der EP-B-610789 bekannt ist. Über die Produktabführöffnung 10 des unteren Verweilers 4 gelangt die Heissluft dann in den oberen Verweiler 4 und den Mischer 3, trocknet und heizt diese auf und wird anschliessend über eine Entgasungsöffnung 21 des Dosierers 2 abgesaugt.

Im Betriebszustand (Fig. 3) hingegen wird die Heissluft bereits an einem Ventil 31 des Produkteinlaufs der Würfelpresse 30 abgesaugt. Weiterhin wird auch an der Entgasungsöffnung 21 des Dosierers 2 Heissdampf abgesaugt, der im Betriebsmodus dem Mischer 3 zugeführt wird.

Damit wird eine Beeinträchtigung der Produkteigenschaften durch übermässige Wärmezufuhr vermieden und insbesondere wird auch das Durchschiessen von Heissdampf in Anfahr- und Auslaufperioden vermieden, wenn sich nur wenig Produkt im Konditionierer 1 befindet.

Im Aufheiz- und Trocknungsmodus wird heisse Luft vom Erhitzer her im Rundlauf geführt. Dadurch können alle relevanten Einrichtungen sterilisiert werden, einschliesslich eines Übergangsbereiches von der Würfelpresse 30 in den Kühler 32 (inkl. Bypass).

Im Betriebsmodus wird Heissluft zum Kühler 32 und zur Tür der Würfelpresse 30 geführt und am Konditioniersystem vorbeigeführt.

Die Pellets werden nach verlassen der Würfelpresse 30 in einem Kühler 32 gekühlt und anschliessend in üblicher Weise weiteren Stationen zugeführt.

### Bezugszeichen

- 1.: Konditionierer
- 2.: Dosierer
- 3.: Mischer
- 4.: Verweiler
- 5.: Stimplatte
- 6.: Stimplatte
- 7.: Produktzuführöffnung
- 8.: Produktabführöffnung
- 9.: Produktzuführöffnung
- 10.: Produktabführöffnung
- 11.: Öffnung
- 12.: Öffnung
- 13.: Mantel
- 14.: Mantel
- 15.: Rotor
- 16.: Rotor
- 17.: Arbeitselement
- 18.: Arbeitselement
- 19.: Antriebseinheit
- 20.: Antriebseinheit
- 21.: Entgasungsöffnung
- 30.: Würfelpresse
- 31.: Ventil
- 32.: Kühler
- 33.: Erhitzer
- 40.: Leitblech
- 41.: Rad
- 42.: Rad
- 43.: Buchse
- 44.: Paddel

## Patentansprüche

1. Verfahren zur Herstellung konditionierter Futter- oder Lebensmittel in einem Konditionierer (1), der einen Dosierer (2), eine Misch- und Verweileinrichtung (3, 4), die mit dem Dosierer (2) verbunden ist enthält, wobei die konditionierten Produkte in einer Press- oder Expanderanlage geformt werden, und wobei zumindest die Press- oder Expanderanlage sowie Mischer (3) und Verweiler (4) mit Heissluft aus einem Erhitzer (33) aufgeheizt und/oder getrocknet werden und dem Mischer (3) Dampf zugeführt wird, **dadurch gekennzeichnet, dass** im Betriebsmodus die Heissluft bereits vor einem Produkteinlauf der Press- oder Expanderanlage abgesaugt wird, bzw. dass die Zufuhr zum Konditionierer (1) gesperrt ist.

2. Verfahren nach Anspruch 1, **dadurch gekennzeichnet, dass** die Heissluft bzw. Dampf auch am Dosierer (2) abgesaugt wird.

3. Verfahren nach Anspruch 1 oder 2, **dadurch gekennzeichnet, dass** im Aufheiz- und Trocknungsmodus die heisse Luft im Rundlauf durch die Press- oder Expanderanlage, Verweiler (4), Mischer (3) und Dosierer (2) geführt wird, unter Einbeziehung eines Übergabebereichs der Produkte von der Press- oder Expanderanlage in einen Kühler (32).

4. Verfahren nach Anspruch 1 oder 2, **dadurch gekennzeichnet, dass** im Betriebsmodus die heisse Luft im Rundlauf über eine Entgasungsöffnung des Dosierers (2) sowie zur Press- oder Expanderanlage geführt wird.

5. Verfahren nach mindestens einem der Ansprüche 1 bis 4, **dadurch gekennzeichnet, dass** heisse Luft in einem Bypass vom Erhitzer (33) zum Kühler (32) geführt wird.

6. Konditionierer zur Verwendung in einem Verfahren nach einem der Ansprüche 1 bis 5 mit mindestens einem Aggregat zum Mischen von Produkten aufweist, in dem ein drehbarer Rotor mit Arbeitselementen angeordnet ist, der Konditionierer (1) mindestens einen Verweiler (4) mit einem Rotor und einen Mischer (3) enthält, wobei der Mischer (3) über dem mindestens einen Verweiler (4) angeordnet ist, und dass weiterhin diese Aggregate so miteinander verbunden sind, dass ein Produktdurchlauf gegeben ist, **dadurch gekennzeichnet, dass**
- der/die Verweiler (4) im Bereich einer Produktabführöffnung (10) mit schraubenfönnig verdreht angeordneten Misch- und Förderelementen versehen ist und
- an einem Produkteinlauf der Press- oder Expanderanlage ein Ventil (31) zur Absaugung von Heissluft angeordnet ist.

7. Konditionierer nach Anspruch 6, **dadurch gekennzeichnet, dass** über dem Mischer (3) ein Dosierer (2) angeordnet ist

8. Konditionierer nach Anspruch 6 oder 7, **dadurch gekennzeichnet, dass** Mischer (3) und Verweiler (4) an beiden Stirnseiten durch Stirnplatten (5, 6) verschlossen sind und bevorzugt als Hohlwellen ausgebildete Rotorwellen aufweisen.

9. Konditionierer nach einem der Ansprüche 6 bis 8, **dadurch gekennzeichnet, dass** die Aggregate mindestens an den Stirnplatten einer Stirnseite so verbindbar sind, dass eine Modulanordnung gegeben ist.

10. Konditionierer nach Anspruch 6, **dadurch gekennzeichnet, dass** die Rotoren von Mischer (3) und Verteiler (4) aus je mindestens einem Segment bestehen.

11. Konditionierer nach einem der Ansprüche 6 bis 10, **dadurch gekennzeichnet, dass** zumindest Mäntel (13, 14) von Mischer (3) und Verweiler (4) sowie deren Stirnplatten (5, 6) und Produktübergabeöffnungen mit Heizmitteln bzw. wärmeisolierenden Mitteln versehen sind.

12. Konditionierer nach Anspruch 6, **dadurch gekennzeichnet, dass** die Misch- und Förderelemente bandförmige Leitbleche (40) sind, die zwischen radförmigen Elementen angeordnet und über diese mit einem Rotor (16) des Verweilers (4) verbunden sind.

13. Konditionierer nach Anspruch 12, **dadurch gekennzeichnet, dass** bevorzugt 4 bis 12 Leitbleche (40) angeordnet sind.

14. Konditionierer nach mindestens einem der Ansprüche 6 oder 12, 13, **dadurch gekennzeichnet, dass** die Misch- und Förderelemente in Form der Leitbleche (40) zur Vergleichmässigung des Produktflusses und eines gleichmässigen Produktaustrages verwendet werden.

15. Konditionierer nach mindestens einem der Ansprüche 6 oder 12, 13, **dadurch gekennzeichnet, dass** der/die Verweiler (4) im Bereich einer Produktabführöffnung (10) mit schraubenförmig verdreht angeordneten Misch- und Förderelementen versehen ist.

16. Konditionieren nach Anspruch 11, **dadurch gekennzeichnet, dass** bedarfsweise angrenzende Bereich, nämlich der Dosierer (2), eine Pressform der Würfelpresse (30) sowie Zu- und Abführkanäle zu der Pressform mittels Heizmittel erwärmt werden.

## Claims

1. A method for manufacturing conditioned feedstuff or foodstuff in a conditioner (1), incorporating a metering unit (2), and a mixer and delay tank (3, 4) connected with the metering unit (2), wherein the conditioned products are molded in a compression molding or expander system, and wherein at least the compression molding or expander system and mixer (3) and delay tank (4) are heated and/or dried with hot air from a heater (33), and vapor is relayed to the mixer (3), **characterized in that** the hot air is removed in the operating mode even before the product inlet of a compression molding or expander system, or that supply to the conditioner (1) is blocked off.

2. The method according to claim 1, **characterized in that** the hot air or vapor is also removed at the metering unit (2).

3. The method according to claim 1 or 2, **characterized in that** the hot air is circulated through the compression molding o expander system, delay tank (4), mixer (3) and metering unit (2) in the heating and drying mode, including the transition area of the products from the compression molding or expander system into a cooler (32).

4. The method according to claim 1 or 2, **characterized in that** the hot air is circulated via a degassing hole of the metering unit (2) as well as relayed to the compression molding or expander system in the operating mode.

5. The method according to at least one of claims 1 to 4, **characterized in that** hot air is relayed in a bypass from the heater (33) to the cooler (32).

6. A conditioner for use in a method according to one of claims 1 to 5, with at least one unit for mixing products, which incorporates a rotatable rotor with working elements, the conditioner contains (1) at least one delay tank (4) with a rotor and a mixer (3), wherein the mixer (3) is arranged over the at least one delay tank (4), and that these units are additionally interconnected in such a way as to allow product throughput, **characterized in that**
- the delay tank(s) (4) is/are provided with screwed-in, mixing and conveying elements in the area of a product discharge hole (10), and
- a valve (31) is arranged at a product inlet of the compression molding or expander system for removing hot air.

7. The conditioner according to claim 6, **characterized in that** a metering unit (2) is arranged over the mixer (3).

8. The conditioner according to claim 6 or 7, **characterized in that** the mixer (3) and delay tanks (4) are sealed on both faces by faceplates (5, 6), and have rotor shafts preferably designed as hollow shafts.

9. The conditioner according to one of claims 6 to 8, **characterized in that** the units can be connected at least on the faceplates of a face in such a way as to yield a modular arrangement.

10. The conditioner according to claim 6, **characterized in that** the rotors of the mixer (3) and delay tanks (4) each consist of at least one segment.

11. The conditioner according to one of claims 6 to 10, **characterized in that** at least jackets (13, 14) of the mixer (3) and delay tanks (4) as well as their faceplates (5, 6) and product transfer holes are provided with heating means or thermal insulation.

12. The conditioner according to claim 6, **characterized in that** the mixing and conveying elements are belt-shaped guiding plates (4), which are arranged between wheel-shaped elements, and connected by the latter with a rotor (16) of the delay tank (4).

13. The conditioner according to claim 12, **characterized in that** 4 to 12 guiding plates (40) are preferably provided.

14. The conditioner according to at least one of claims 6 or 12, 13, **characterized in that** the mixing and conveying elements are used in the form of guiding plates (40) to even out the product flow and achieve a uniform product discharge.

15. The conditioner according to at least one of claims 6 or 12, 13, **characterized in that** the delay tank(s) (4) in the area of a product discharge hole (10) is provided with screwed-in mixing and conveying elements.

16. Conditioning according to claim 11, **characterized in that** the adjacent area, namely the metering unit (2), a mold of the pelleting press (30) as well as supply and discharge channels to the mold are heated by heating means as needed.

## Revendications

1. Procédé de fabrication de fourrage ou de produits alimentaires conditionnés, dans un conditionneur (1) qui contient un doseur (2), un dispositif malaxeur et de séjour (3, 4) qui est relié au doseur (2), les produits conditionnés étant moulés dans un système de presse et d'expansion et au moins le système de presse et d'expansion ainsi que le malaxeur (3) et la chambre de séjour (4) étant réchauffés et/ou séchés par de l'air chaud émanant d'un réchauffeur (33) et de la vapeur étant amenée au malaxeur (3), **caractérisé en ce qu'**en mode de service, l'air chaud est d'ores et déjà aspiré en amont d'une alimentation de produit du système de presse ou d'expansion ou que son alimentation vers le conditionneur (1) est bloquée.

2. Procédé selon la revendication 1, **caractérisé en ce que** l'air chaud ou la vapeur est aspiré également dans le doseur (2).

3. Procédé selon la revendication 1 ou 2, **caractérisé en ce qu'**en mode de chauffage et de dessiccation, l'air chaud est guidé en circuit concentrique à travers le système de presse ou d'expansion, la chambre de séjour (4), le malaxeur (3) et le doseur (2), en incluant une zone de transfert du produit du système de presse ou d'expansion, dans un refroidisseur (32).

4. Procédé selon la revendication 1 ou 2, **caractérisé en ce que** l'air chaud est conduit en circuit concentrique par l'intermédiaire d'un orifice de dégazage du doseur (2) ainsi que vers le dispositif de presse ou d'expansion.

5. Procédé selon au moins l'une quelconque des revendications 1 à 4, **caractérisé en ce que** de l'air chaud est guidé dans une dérivation du réchauffeur (33) au refroidisseur (32).

6. Conditionneur destiné à être utilisé dans un procédé selon l'une quelconque des revendications 1 à 5, avec au moins un agrégat pour le mélange de produits, dans lequel un rotor rotatif est disposé avec des éléments de travail, le conditionneur (1) contenant au moins une chambre de séjour (4) avec un rotor et un malaxeur (3), le malaxeur (3) étant disposé au dessus d'au moins la chambre de séjour (4) et par ailleurs, ces agrégats étant reliés entre eux de façon à permettre un passage du produit, **caractérisé en ce que**
- dans la zone d'un orifice d'évacuation du produit (10), la/les chambre(s) de séjour (4) sont munies d'éléments de malaxage et de transport hélicoïdaux, disposés de façon tordue et
- une soupape (31) pour l'aspiration d'air chaud est disposée sur une alimentation du produit du système de presse et d'expansion.

7. Conditionneur selon la revendication 6, **caractérisé en ce qu'**un doseur (2) est disposé au-dessus du malaxeur (3).

8. Conditionneur selon la revendication 6 ou 7, **caractérisé en ce que** le mélangeur (3) et la chambre de séjour (4) sont fermés sur les deux parties frontales par des plaques frontales (5, 6) et sont munis d'arbres de rotor conçus de préférence en tant qu'arbres creux.

9. Conditionneur selon l'une quelconque des revendications 6 à 8, **caractérisé en ce qu'**au moins sur les plaques frontales d'un côté frontal, les agrégats sont reliables de façon à former un agencement modulaire.

10. Conditionneur selon la revendication 6, **caractérisé en ce que** les rotors du mélangeur (3) et de la chambre de séjour (4) sont constitués chacun d'au moins un segment.

11. Conditionneur selon l'une quelconque des revendications 6 à 10, **caractérisé en ce qu'**au moins des enveloppes (13, 14) du malaxeur (3) et de la chambre de séjour (4), ainsi que les plaques frontales (5, 6) de ces derniers et des orifices de transfert du produits sont munis de moyens de chauffage ou de moyens d'isolation thermique.

12. Conditionneur selon la revendication 6, **caractérisé en ce que** les éléments de malaxage et de transport sont des tôles conductrices (40) en forme de bandes, qui sont disposées entre des éléments en forme de roue et reliées avec un rotor (16) de la chambre de séjour (4) par l'intermédiaire de ces dernières.

13. Conditionneur selon la revendication 12, **caractérisé en ce que** de préférence 4 à 12 tôles conductrices (40) sont disposées.

14. Conditionneur selon au moins l'une quelconque des revendications 6 ou 12, 13, **caractérisé en ce que** les éléments de malaxage et de transport présentant la forme de tôles conductrices (40) sont utilisés pour homogénéiser le flux de produit et pour assurer une évacuation homogène du produit.

15. Conditionneur selon au moins l'une quelconque des revendications 6 ou 12, 13, **caractérisé en ce que** dans la zone d'un orifice d'évacuation du produit (10), la/les chambre(s) de séjour (4) sont munies d'éléments de malaxage et de transport hélicoïdaux, disposés de façon tordue.

16. Conditionneur selon la revendication 11, **caractérisé en ce qu'**en cas de besoin, une zone limitrophe, à savoir le doseur (2), un moule à presse de la presse à cubes (30) ainsi que des canalisations d'alimentation et d'évacuation vers le moule à presse est réchauffée par des moyens de chauffage.
